# FASCICULE DE BREVET EUROPEEN

(11) **EP 3 229 399 B1**
(45) Date de publication et mention de la délivrance du brevet: **02.06.2021**
(21) Numéro de dépôt: 17164581.5
(22) Date de dépôt: 03.04.2017
(51) Int. Cl.: H04L 9/08

(54) **PROCÉDÉ DE CHIFFREMENT À CLEF PARTAGÉE ENTRE UN SERVEUR ET UN COMPTEUR COMMUNICANT**
CHIFFRIERVERFAHREN MIT GEMEINSAM GENUTZTEM CHIFFRIERSCHLÜSSEL ZWISCHEN EINEM SERVER UND EINEM DAMIT KOMMUNIZIERENDEN ZÄHLER
METHOD FOR SHARED-KEY ENCRYPTION BETWEEN A SERVER AND A SMART METER

(30) Priorité: 06.04.2016 FR 1653027
(43) Date de publication de la demande: 11.10.2017
(73) Titulaire: Sagemcom Energy & Telecom SAS, 92500 Rueil-Malmaison (FR)
(72) Inventeur: LECAPPON, Jean-Paul, 92500 RUEIL MALMAISON (FR); BAROIS, Jérôme, 92500 RUEIL MALMAISON (FR)
(74) Mandataire: Cabinet Le Guen Maillet

(56) Documents cités:
- WO-A1-2015/082607
- WO-A1-2016/033610
- MOHAMMAD SADEQ DOUSTI ET AL: "FORSAKES: A Forward-Secure Authenticated Key Exchange Protocol Based on Symmetric Key-Evolving Schemes", INTERNATIONAL ASSOCIATION FOR CRYPTOLOGIC RESEARCH,, vol. 20151123:012000, 23 novembre 2015 (2015-11-23), pages 1-38, XP061019606,

## Description

La présente invention concerne les réseaux de distribution d'électricité, d'eau ou de gaz. Le domaine technique est celui des compteurs communicants (ou dits *« intelligents », smart meter* en anglais) connectés à un réseau dit intelligent *(smartgrid* en anglais), et encore plus particulièrement le domaine technique du chiffrement des communications entre un serveur central et un compteur communicant.

Un compteur communicant est un compteur disposant de technologies permettant une mesure détaillée et précise, et éventuellement en temps réel, d'une consommation d'électricité, d'eau ou de gaz, ainsi qu'une transmission des données mesurées vers un gestionnaire du réseau de distribution. La transmission des données s'effectue généralement par ondes radio ou par courants porteurs en ligne (CPL) vers une passerelle de communication. La passerelle de communication est quant à elle souvent connectée au gestionnaire du réseau de distribution chargé du comptage via un réseau de communication public tel Internet.

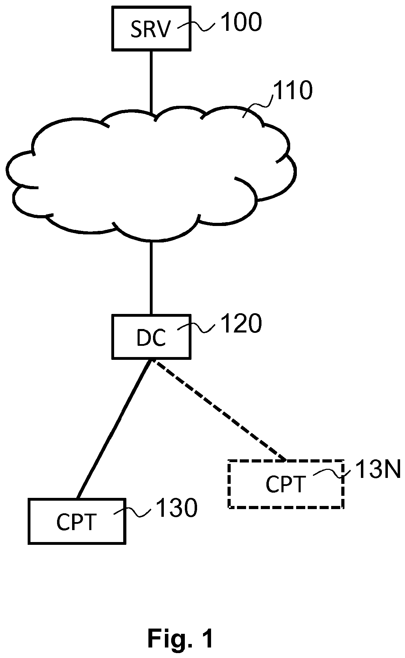

Un exemple de réseau de distribution dit intelligent est illustré en **Fig. 1****.** Il peut s'agir typiquement d'un réseau de compteurs électriques communicants connectés à un serveur central d'un système informatique du gestionnaire du réseau de distribution. Dans un tel système, plusieurs compteurs communicants CPT 130, 13N sont connectés à au moins un serveur SRV 100, dit serveur central. Ce serveur central SRV 100 est hébergé typiquement au sein du système d'information du gestionnaire du réseau de distribution. Des connexions transitent via une passerelle de communication DC 120 *(Data Concentrator* en anglais). Les connexions entre les compteurs communicants CPT 130, 13N et la passerelle de communication DC 120 sont assurées par des technologies de type CPL ou ondes radio. La connexion entre la passerelle de communication DC 120 et le serveur central SRV 100 est fréquemment établie au travers d'un réseau public 110, tel Internet. Dans le cas où les compteurs communicants CPT 130, 13N peuvent être configurés à distance, il est préférable d'assurer que seul le gestionnaire du réseau de distribution puisse effectuer ces actions de configuration à distance, afin, notamment, d'éviter des actes de malveillance. Il est pour cela intéressant de sécuriser les connexions entre les divers équipements en jeux. Une protection vis-à-vis d'éventuelles attaques provenant du réseau public 110 est donc préférable. La sécurisation d'un serveur tel le serveur central SRV 100, hébergé au sein d'un système d'information, est réputée assurée. Les compteurs communicants CPT 130, 13N, sans accès direct au réseau public 110 tel Internet, sont aussi réputés sécurisés. La passerelle de communication DC 120 est donc un maillon faible, car connectée au réseau public 110 et ne pouvant mettre en œuvre des mesures de protection complexe car située hors du système d'information du gestionnaire du réseau de distribution.

Une première solution de sécurisation des échanges repose sur l'intégration de module matériel de sécurité *(Hardware Security Module* - HSM - en anglais) dans la passerelle de communication DC 120, ainsi que le serveur central SRV 100, afin d'assurer un chiffrement des communications entre la passerelle de communication DC 120 et le serveur central SRV 100, mais aussi un stockage sécurisé des données par la passerelle de communication DC 120. Cependant, cette solution n'est pas satisfaisante car il est bien souvent impossible de garantir une intégrité physique des passerelles de communications DC 120, celles-ci étant fréquemment localisées dans le domaine public. Il est par conséquent souhaitable de garantir une sécurisation des communications de bout en bout entre le serveur central SRV 100 et les compteurs communicants CPT 130, 13N.

Une deuxième solution repose donc sur un provisionnement de clef de chiffrement en usine dans les compteurs communicants CPT 130, 13N, voire sur une intégration de module matériel de sécurité, afin de mettre en œuvre un chiffrement symétrique reposant sur une clef de chiffrement partagée. Cette solution permet de garantir une sécurisation des communications de bout en bout entre les compteurs communicants CPT 130, 13N et le serveur central SRV 100. Cette solution n'est par contre généralement pas applicable dans le cas d'un parc de compteurs communicants déjà déployé en raison de coûts de modification de chacun des compteurs communicants sur le terrain. C'est particulièrement le cas si un module matériel de sécurité, module matériel de sécurité en lui-même coûteux, doit être rajouté dans chaque compteur communicant.

Le document WO2015082607 concerne par exemple un capteur de mesure d'une grandeur, telle qu'une grandeur électrique ou une grandeur thermodynamique, destiné à être relié de manière sécurisée à un serveur informatique via une passerelle de communication qui ne soit pas de confiance.

Il est par conséquent souhaitable de pallier ces inconvénients de l'état de la technique.

L'invention concerne un procédé de chiffrement à clef partagée entre un serveur central et un compteur communicant, le procédé étant exécuté par le compteur communicant. Le procédé comprend : recevoir un premier message comprenant un premier mot de passe, le premier message indiquant une ouverture d'une session de communication, déterminer une première empreinte correspondant à une empreinte du premier mot de passe, obtenir une deuxième empreinte prédéterminée.

Quand la première empreinte est égale à la deuxième empreinte, alors le procédé comprend : obtenir un paramètre de chiffrement prédéterminé, générer une clef de chiffrement à partir du premier mot de passe reçu et du paramètre de chiffrement, recevoir un deuxième message en provenance du serveur central, le deuxième message étant chiffré et déchiffrer le deuxième message au moyen de la clef de chiffrement.

Avantageusement, la clef de chiffrement, partagée entre le compteur communicant et le serveur central, et permettant ainsi de chiffrer les communications entre ces deux équipements, n'est pas connue de la passerelle de communication. Cela garantit une sécurisation de bout en bout des communications entre le serveur central et le compteur communicant. De même, la clef de chiffrement n'est pas enregistrée dans le compteur communicant et elle ne peut être générée par ce dernier qu'après réception du mot de passe. Ce mot de passe n'est pas connu du compteur communicant, qui n'en connaît qu'une empreinte *(hash* en anglais). Le compteur communicant est donc à l'abri d'une attaque visant à découvrir la clef de chiffrement, clef de chiffrement qu'il ne peut générer que suite à la réception du mot de passe lors de l'ouverture d'une session de communication.

Selon un mode de réalisation complémentaire de l'invention, le procédé comprend les étapes ultérieures de : déterminer une nouvelle valeur pour le paramètre de chiffrement, émettre un troisième message à destination du serveur central, le troisième message comprenant la nouvelle valeur du paramètre de chiffrement et étant chiffré au moyen de la clef de chiffrement et mettre à jour la valeur du paramètre de chiffrement enregistré sur le module de stockage avec la nouvelle valeur du paramètre de chiffrement, la nouvelle valeur du paramètre de chiffrement étant utilisée pour la détermination d'une nouvelle clef de chiffrement, commune au serveur central et au compteur communicant, lors d'une nouvelle session de communication.

Avantageusement, la valeur d'un paramètre de chiffrement, servant à générer la clef de chiffrement, est modifiée lors de chaque itération du procédé de chiffrement, garantissant que la clef de chiffrement est différente lors de chaque session de communication. Pour cela, le compteur communicant détermine par tout moyen une nouvelle valeur du paramètre de chiffrement. Le compteur communicant transmet cette nouvelle valeur du paramètre de chiffrement au serveur central dans un message chiffré. Ainsi, le serveur central dispose lui aussi de cette nouvelle valeur du paramètre de chiffrement. Le serveur central peut donc générer une clef de chiffrement identique à celle du compteur communicant - clef de chiffrement dite partagée - lors de l'ouverture d'une nouvelle session de communication.

Selon un mode de réalisation complémentaire de l'invention, le compteur communicant comprenant en outre un module de comptage, le deuxième message comprend une commande d'interrogation d'une valeur d'un compteur du module de comptage du compteur communicant, la nouvelle valeur du paramètre de chiffrement étant choisie égale à la valeur du compteur du module de comptage interrogé.

Avantageusement, la nouvelle valeur du paramètre de chiffrement est choisie égale à la valeur d'un compteur du compteur communicant. Cela limite la complexité d'implémentation de la solution car une valeur d'un paramètre existant est utilisée. Cela permet aussi de limiter les échanges de messages depuis le compteur communicant vers le serveur central, puisqu'un même message, comportant la valeur d'un compteur à relever, peut comprendre du coup aussi la nouvelle valeur du paramètre de chiffrement si celle-ci est choisie comme étant la valeur dudit compteur à relever. De même, le choix de la valeur d'un compteur, paramètre par nature évoluant avec le temps, garantit que le paramètre de chiffrement est bien différent lors de chaque itération, assurant une diversité des clefs de chiffrement générées.

L'invention concerne également un compteur communicant, le compteur communicant étant adapté pour : recevoir un premier message comprenant un premier mot de passe, le premier message indiquant une ouverture d'une session de communication, déterminer une première empreinte correspondant à une empreinte du premier mot de passe, obtenir une deuxième empreinte. Quand la première empreinte est égale à la deuxième empreinte, le compteur communicant est adapté pour : générer une clef de chiffrement à partir du premier mot de passe reçu et de la valeur d'un paramètre de chiffrement prédéterminée, recevoir un deuxième message en provenance du serveur central, le deuxième message étant chiffré et déchiffrer le deuxième message au moyen de la clef de chiffrement.

Selon un mode de réalisation de l'invention, le compteur communicant est adapté en outre pour : déterminer une nouvelle valeur pour le paramètre de chiffrement, émettre un troisième message à destination du serveur central, le troisième message comprenant la nouvelle valeur du paramètre de chiffrement et étant chiffré au moyen de la clef de chiffrement et mettre à jour la valeur du paramètre de chiffrement en utilisant la nouvelle valeur du paramètre de chiffrement, la nouvelle valeur du paramètre de chiffrement étant utilisée pour la détermination d'une nouvelle clef de chiffrement, commune au serveur central et au compteur communicant, lors d'une nouvelle session de communication.

Selon un mode de réalisation de l'invention, le compteur communicant comprenant en outre un module de comptage, le compteur communicant est adapté pour déterminer une valeur d'un compteur du module de comptage, la nouvelle valeur pour le paramètre de chiffrement étant choisie égale à cette dernière valeur du compteur du module de comptage.

L'invention concerne également un procédé de chiffrement à clef partagée entre un serveur central et un compteur communicant, le procédé étant exécuté par le serveur central et comprenant : générer un premier mot de passe en utilisant un identifiant du compteur communicant, obtenir un paramètre de chiffrement associé audit compteur communicant, générer une clef de chiffrement à partir du premier mot de passe généré et du paramètre de chiffrement obtenu, émettre un message à destination du compteur communicant, le message comprenant une commande de lecture d'une valeur d'un compteur du compteur communicant, le message étant chiffré au moyen de la clef de chiffrement, recevoir en retour un message comprenant la valeur du compteur, le message étant chiffré au moyen de la clef de chiffrement, déchiffrer le message reçu, mettre à jour la valeur du paramètre de chiffrement associé avec le compteur communicant, en utilisant la valeur reçue du compteur.

Avantageusement, le serveur central génère un mot de passe en association avec chaque compteur communicant avec lequel il communique, le mot de passe dépendant d'un identifiant du compteur communicant. Le serveur central génère aussi une clef de chiffrement propre à chaque compteur communicant, la clef de chiffrement étant dépendante du précédent mot de passe et d'un paramètre de chiffrement enregistré en association avec ledit compteur communicant. Lors d'échanges, par des messages chiffrés, une nouvelle valeur du paramètre de chiffrement, choisie par exemple égale à la valeur d'un compteur, est transmise au serveur central, qui met à jour la valeur du paramètre de chiffrement enregistré. Lors de l'établissement d'une nouvelle session de communication, le serveur central et le compteur communicant peuvent ainsi utiliser une valeur commune - partagée - du paramètre de chiffrement, garantissant une génération d'une même clef de chiffrement partagée. Dit autrement, un chiffrage symétrique des échanges, utilisant une même clef de chiffrement partagée, permet donc de sécuriser les échanges. La clef de chiffrement est renouvelée à chaque génération de façon identique par le serveur central et le compteur communicant grâce au partage d'une nouvelle valeur du paramètre de chiffrement.

L'invention concerne également un serveur central, le serveur central étant adapté pour : générer un premier mot de passe, obtenir un paramètre de chiffrement, générer une clef de chiffrement à partir du premier mot de passe généré et du paramètre de chiffrement obtenu, émettre un message à destination d'un compteur communicant, le message comprenant une commande de lecture d'une valeur d'un compteur du compteur communicant, le message étant chiffré au moyen de la clef de chiffrement, recevoir en retour un message comprenant la valeur du compteur, le message étant chiffré au moyen de la clef de chiffrement, déchiffrer le message reçu, mettre à jour la valeur du paramètre de chiffrement en utilisant la valeur reçue du compteur.

L'invention concerne également un système comprenant un serveur central et un compteur communicant. Ledit compteur communicant est adapté pour : recevoir un premier message comprenant un premier mot de passe, le premier message indiquant l'ouverture d'une session de communication, déterminer une première empreinte correspondant à une empreinte du premier mot de passe, obtenir une deuxième empreinte. Quand la première empreinte est égale à la deuxième empreinte, ledit compteur communicant est adapté pour : générer une clef de chiffrement à partir du premier mot de passe reçu et de la valeur d'un paramètre de chiffrement, recevoir un deuxième message en provenance du serveur central, le deuxième message comprenant une commande de lecture d'une valeur d'un compteur d'un module de comptage du compteur communicant, le deuxième message étant chiffré au moyen de la clef de chiffrement, déchiffrer le deuxième message au moyen de la clef de chiffrement, déterminer une nouvelle valeur pour le paramètre de chiffrement, la nouvelle valeur correspondant à la valeur du compteur du module de comptage compteur communicant lue, émettre un troisième message à destination du serveur central, le troisième message comprenant la nouvelle valeur du paramètre de chiffrement et étant chiffré au moyen de la clef de chiffrement, et, mettre à jour la valeur du paramètre de chiffrement en utilisant la nouvelle valeur du paramètre de chiffrement. Le serveur central est adapté pour : générer le premier mot de passe, obtenir le paramètre de chiffrement, générer une clef de chiffrement à partir du premier mot de passe généré et du paramètre de chiffrement, émettre le deuxième message à destination du compteur communicant, recevoir en retour le troisième message, déchiffrer le troisième message reçu, mettre à jour la valeur du paramètre de chiffrement en utilisant la valeur reçue du compteur.

L'invention concerne également un programme d'ordinateur, qui peut être stocké sur un support et/ou téléchargé d'un réseau de communication, afin d'être lu par un processeur. Ce programme d'ordinateur comprend des instructions pour implémenter tout ou partie des étapes mentionnées ci-dessous, lorsque ledit programme est exécuté par le processeur. L'invention concerne également un medium de stockage d'informations comprenant un tel programme d'ordinateur.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
- la Fig. 1 illustre schématiquement un système dit « *réseau de distribution intelligent* » permettant une connexion de compteurs communicants avec un serveur central via une passerelle de communication ;
- la Fig. 2 illustre schématiquement un exemple d'architecture matérielle d'un compteur communicant permettant un chiffrement à clef partagée selon un mode de réalisation de l'invention ;
- la **Fig. 3** illustre schématiquement un exemple d'architecture matérielle d'un serveur central permettant un chiffrement à clef partagée selon un mode de réalisation de l'invention ;
- la **Fig. 4** illustre schématiquement un procédé de fonctionnement d'un système tel qu'illustré en Fig. 1 et mettant en œuvre un procédé de chiffrement à clef partagée selon un mode de réalisation de l'invention.

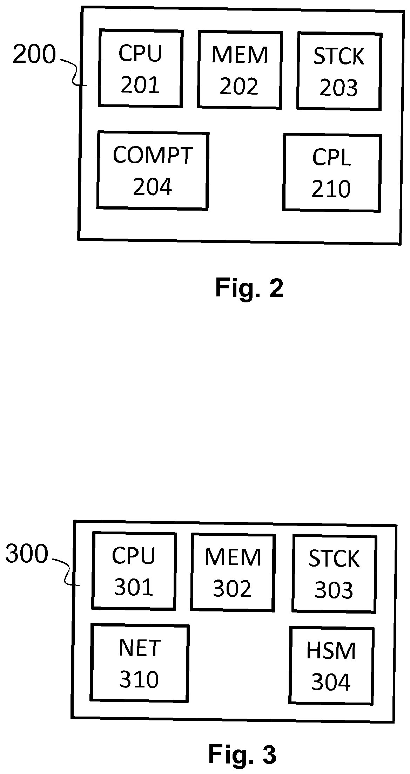

La **Fig. 2** illustre schématiquement un exemple d'architecture matérielle d'un compteur communicant 200 permettant un chiffrement à clef partagée des communications avec un serveur central selon un mode de réalisation de l'invention. Le compteur communicant 200 correspond à un compteur communicant CPT 130, 13N mettant en œuvre un procédé de chiffrement à clef partagée selon un mode de réalisation de l'invention, avec un serveur central 300. Ce serveur central 300 correspond à un serveur central 100 mettant en œuvre le procédé de chiffrement à clef partagée selon le mode de réalisation de l'invention. Un tel serveur central SRV 300 est illustré en Fig. 3 ci-après. Le compteur communicant 200 comporte, reliés par un bus de communication (non représenté) : un processeur ou CPU (« *Central Processing Unit »* en anglais) 201 ; une mémoire MEM 202 de type RAM (« *Random Access Memory* » en anglais) et/ou ROM (« *Read Only Memory* » en anglais) et un module de stockage STCK 203 de type stockage interne ; un module de comptage COMPT 204 et un module réseau CPL 210. Le module de stockage STCK 203 peut être de type disque dur HDD (« *Hard Disk Drive* » en anglais) ou SSD (« *Solid-State Drive* » en anglais), ou de type lecteur de support de stockage externe, tel un lecteur de cartes SD (« *Secure Digital* » en anglais). Le processeur CPU 201 peut enregistrer des données sur le module de stockage STCK 203 ou lire des données enregistrées sur le module de stockage STCK 203. Ces données peuvent correspondre à des paramètres de configuration, des paramètres issus du module de comptage COMPT 204 ou à des informations reçues par exemple dans un message. Le module réseau CPL 210 est typiquement un module réseau compatible avec une technologie type courant porteur en ligne (CPL). Selon un mode de réalisation, le module réseau CPL 210 peut comporter un module radio permettant des communications sans fil. Les communications sans fil peuvent être conformes à une norme de type Wi-Fi (« *Wireless-Fidelity* » en anglais), GPRS (« *General Packet Radio Service* - *GPRS »* en anglais), une norme de téléphonie mobile de troisième génération (par exemple « *Universal Mobile Telecommunications System* - *UMTS »* en anglais), une norme de téléphonie mobile de quatrième génération (par exemple « *Long Term Evolution* - *LTE* » en anglais) ou toute autre norme de téléphonie mobile. Le module de comptage COMPT 204 comporte au moins un compteur, au moins un paramètre étant associé audit compteur. Dans le cas d'un réseau de distribution électrique, et donc d'un compteur communicant 200 de type compteur électrique, une valeur du paramètre permet typiquement de quantifier une énergie électrique délivrée par le réseau de distribution. De même, dans le cas d'un réseau de distribution d'eau, respectivement de gaz, la valeur du paramètre permet typiquement de quantifier un volume d'eau, respectivement de gaz, délivré par le compteur communicant 200. Dit autrement, le module de comptage COMPT 204 permet de quantifier une énergie électrique, un volume d'eau ou de gaz, délivré par le réseau de distribution. Le processeur 201 est capable d'exécuter des instructions chargées dans la mémoire MEM 202, par exemple à partir du module de stockage STCK 203 ou d'un réseau de communication via le module réseau CPL 210. Lorsque le compteur communicant 200 est mis sous tension, le processeur 201 est capable de lire de la mémoire MEM 202 des instructions et de les exécuter. Ces instructions forment un programme d'ordinateur causant la mise en œuvre, par le processeur 201, de tout ou partie des procédés et étapes décrits ci-après. Ainsi, tout ou partie des procédés et étapes décrits ci-après peut être implémenté sous forme logicielle par exécution d'un ensemble d'instructions par une machine programmable, telle qu'un DSP *(Digital Signal Processor* en anglais) ou un microcontrôleur. Tout ou partie des procédés et étapes décrits ici peut aussi être implémenté sous forme matérielle par une machine ou un composant dédié, tel qu'un FPGA *(Field-Programmable Gate Array* en anglais) ou un ASIC *(Application-Specific Integrated Circuit* en anglais).

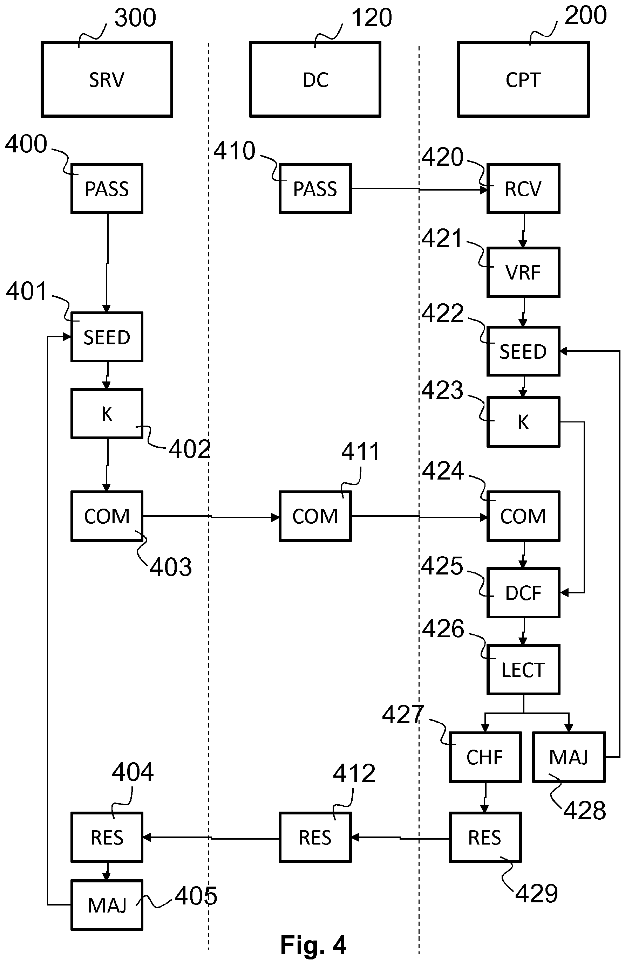

Selon un mode de réalisation alternatif de l'invention, la Fig. 2 représente un module de traitement 200 destiné à être inséré dans un compteur communicant CPT 130, 13N. Dans ce cas, le module de traitement 200 comprend un processeur CPU 201, une mémoire MEM 202, un module de stockage STCK 203 et un module de communication (non représenté). Le module de communication permet au module de traitement 200 d'accéder à des informations issues d'un module de comptage 204 ainsi qu'à un module réseau CPL, tous deux compris dans le compteur communicant CPT 130, 13N. Dans ce mode de réalisation de l'invention, le module de traitement 200 met en œuvre des étapes 420 à 429 du procédé décrit en relation avec la Fig. 4.

La **Fig. 3** illustre schématiquement un exemple d'architecture matérielle d'un serveur central 300 permettant un chiffrement à clef partagée des communications avec un compteur communicant 200.

Le serveur central 300 correspond à un serveur central 100 mettant en œuvre un chiffrement à clef partagée, selon un mode de réalisation de l'invention, avec un compteur communicant adapté, c'est-à-dire un compteur communicant 200. Le serveur central 300 comporte, reliés par un bus de communication (non représenté) : un processeur ou CPU (« *Central Processing Unit »* en anglais) 301 ; une mémoire MEM 302 de type RAM (« *Random Access Memory* » en anglais) et/ou ROM (« *Read Only Memory* » en anglais) et un module de stockage STCK 303 de type stockage interne ; un module réseau NET 310 et possiblement un module matériel de sécurité HSM 304 *(Hardware Security Module* en anglais). Le module de stockage STCK 303 peut être de type disque dur HDD (« *Hard Disk Drive* » en anglais) ou SSD (« *Solid-State Drive »* en anglais), ou de type lecteur de support de stockage externe, tel un lecteur de cartes SD (« *Secure Digital* » en anglais). Le processeur CPU 301 peut enregistrer des données sur le module de stockage STCK 303 ou lire des données enregistrées sur le module de stockage STCK 303. Ces données peuvent correspondre à des paramètres de configuration ou à des informations reçues par exemple dans un message. Le module réseau NET 310 est typiquement un module réseau permettant de connecter le serveur central 300 à un réseau de communication 110. Le module réseau NET 310 est typiquement une interface compatible Ethernet. Le processeur 301 est capable d'exécuter des instructions chargées dans la mémoire MEM 302, par exemple à partir du module de stockage STCK 303 ou d'un réseau de communication via le module réseau NET 310. Lorsque le serveur central 300 est mis sous tension, le processeur 301 est capable de lire de la mémoire MEM 302 des instructions et de les exécuter. Ces instructions forment un programme d'ordinateur causant la mise en œuvre, par le processeur 301, de tout ou partie des procédés et étapes décrits ci-après. Ainsi, tout ou partie des procédés et étapes décrits ci-après peut être implémenté sous forme logicielle par exécution d'un ensemble d'instructions par une machine programmable, telle qu'un DSP *(Digital Signal Processor* en anglais) ou un microcontrôleur. Tout ou partie des procédés et étapes décrits ici peut aussi être implémenté sous forme matérielle par une machine ou un composant dédié, tel qu'un FPGA *(Field-Programmable Gate Array* en anglais) ou un ASIC *(Application-Specific Integrated Circuit* en anglais).

Selon un mode de réalisation alternatif de l'invention, la Fig. 3 représente un module de traitement 300 destiné à être inséré dans un serveur central SRV 100. Dans ce cas, le module de traitement 300 comprend un processeur CPU 301, une mémoire MEM 302, un module de stockage STCK 303 et un module de communication (non représenté). Le module de communication permet au module de traitement 300 de communiquer avec d'autres modules compris dans le serveur central SRV 100 tel qu'un module réseau NET ou un module matériel de sécurité HSM. Dans ce mode de réalisation de l'invention, le module de traitement 300 met en œuvre des étapes 400 à 405 du procédé décrit en relation avec la Fig. 4.

La **Fig. 4** illustre schématiquement un procédé de fonctionnement d'un système tel qu'illustré en Fig. 1 et mettant en œuvre un procédé de chiffrement à clef partagée selon un mode de réalisation de l'invention.

Le système décrit dans la présente figure est similaire au système illustré en Fig. 1, et comprend :
- un serveur central SRV 300 mettant en œuvre le procédé de chiffrement à clef partagée selon un mode de réalisation de l'invention,
- une passerelle de communication DC 120, et,
- au moins un compteur communicant CPT 200 mettant en œuvre le procédé de chiffrement à clef partagée selon un mode de réalisation de l'invention.

Chaque compteur communicant 200 possède un identifiant unique, typiquement un identifiant associé à son module réseau CPL 210. Le procédé décrit ci-après est notamment mis en œuvre lorsque le serveur central SRV 300 établit une communication vers un compteur communicant CPT 200.

Selon un mode de réalisation de l'invention, les étapes sont ci-après décrites suivant un ordre chronologique, sauf précision contraire.

Dans une première étape 400, le serveur central 300 génère un premier mot de passe en utilisant l'identifiant du compteur communicant 200 avec lequel il souhaite établir une communication. Le premier mot de passe est par exemple généré au moyen d'une fonction prenant notamment comme argument l'identifiant unique du compteur communicant 200. Un autre argument tel un identifiant propre au réseau de distribution peut être utilisé en complément, cet identifiant pouvant possiblement être intégré au sein du module matériel de sécurité 304.

Dans une étape suivante 401, le serveur central 300 retrouve un paramètre de chiffrement SEED enregistré sur le module de stockage 303 en association avec le compteur communicant 200. Dans l'hypothèse où le procédé est effectué pour la première fois, une valeur du paramètre de chiffrement SEED par défaut est utilisée. Cette valeur par défaut peut correspondre à la valeur « zéro », la valeur de l'identifiant du compteur communicant 200 (ou bien une empreinte de cette valeur), ou toute autre valeur prédéfinie.

Dans une étape suivante 402, le serveur central 300 génère une clef de chiffrement partagée « K » à partir du premier mot de passe généré et du paramètre de chiffrement SEED retrouvé lors de l'étape 401. La clef de chiffrement partagée « K » est générée au moyen d'une fonction prenant comme arguments au moins le paramètre de chiffrement SEED et le premier mot de passe. La fonction est choisie parmi les fonctions connues permettant de générer une clef de chiffrement de qualité, par exemple conformément à la norme ANSI X9.63-2011 (*American National Standards Institute* en anglais).

Dans une étape 403, le serveur central 300 émet un premier message COM à destination du compteur communicant 200, le premier message COM comprenant une commande de lecture d'une valeur d'un compteur du module de comptage 204 du compteur communicant 200, le premier message COM étant chiffré au moyen de la clef de chiffrement partagée « K ». On entend par là que la charge utile *(payload* en anglais) du premier message COM est chiffrée, les données nécessaires au routage du premier message COM restent en clair.

Les communications entre le serveur central 300 et le compteur communicant 200 transitent classiquement via la passerelle de communication 120.

Dans une étape 411, la passerelle de communication 120 reçoit le premier message COM à destination du compteur communicant 200. Il est à noter que la passerelle de communication 120 ne possède pas la clef de chiffrement partagée « K » et est donc incapable de déchiffrer le premier message COM. La passerelle de communication 120 est aussi incapable de générer la clef de chiffrement partagée « K » car elle n'a pas connaissance du paramètre de chiffrement SEED. Dit autrement, toute personne qui aurait accès aux données de la passerelle de communication 120 serait incapable de déchiffrer les messages en transit faute de connaître le paramètre de chiffrement SEED, quand bien même elle connaîtrait la fonction de chiffrement utilisée, des identifiants de compteurs communicants ainsi que la méthode de génération du premier mot de passe.

Dans une étape 410, la passerelle de communication 120 ouvre une session de communication avec le compteur communicant 200. Pour cela, la passerelle de communication 120 génère le premier mot de passe (selon une méthode identique à celle mise en œuvre par le serveur central 300 lors de l'étape 400). Le premier mot de passe est par exemple généré au moyen d'une fonction prenant notamment comme argument l'identifiant unique du compteur communicant 200. Cet identifiant est possiblement compris dans le premier message reçu par la passerelle de communication 120. En effet, selon un mode de réalisation de l'invention, cet identifiant correspond à l'adresse réseau du module réseau CPL 210 du compteur communicant 200. La passerelle de communication 120 envoie un deuxième message comprenant le premier mot de passe au compteur communicant 200 selon un format prédéterminé, le format prédéterminé indiquant une demande d'ouverture d'une session de communication.

L'étape 410 peut être déclenchée par la réception du premier message COM par la passerelle de communication DC 120. L'étape 410 peut avoir été déclenchée précédemment par un autre événement.

Dans une étape 420, le compteur communicant 200 reçoit le deuxième message comprenant le premier mot de passe généré par la passerelle de communication 120, le deuxième message indiquant l'ouverture d'une session de communication.

Dans une étape 421, le compteur communicant 200 vérifie si le premier mot de passe reçu autorise l'ouverture d'une session de communication. Pour cela, le compteur communicant 200 détermine une première empreinte correspondant à une empreinte du premier mot de passe et retrouve sur le module de stockage 203 une deuxième empreinte prédéterminée correspondant à une empreinte d'un deuxième mot de passe. L'empreinte du deuxième mot de passe a typiquement été enregistrée sur le module de stockage 203 du compteur communicant 200 lors d'une phase de fabrication ou de configuration du compteur communicant 200. Si les empreintes du premier mot de passe et du deuxième mot de passe correspondent, c'est-à-dire sont égales, alors une session de communication est ouverte sur le compteur communicant 200. Dans le cas contraire, le compteur communicant 200 ignore tout autre message reçu ultérieurement (sauf si ce message correspond à une autre demande d'ouverture de session ; dans ce cas, l'étape 421 est répétée).

La détermination de l'empreinte du premier mot de passe se fait au moyen d'une fonction de hachage, par exemple une fonction de type MD5 *(Message Digest 5* en anglais), SHA-1 *(Secure Hash Algorithm 1* en anglais) ou SHA-2 *(Secure Hash Algorithm* 2 en anglais).

Dans une étape 422, le compteur communicant 200 retrouve le paramètre de chiffrement SEED enregistré sur le module de stockage 203. Dans l'hypothèse où le procédé est effectué pour la première fois, la valeur du paramètre de chiffrement SEED par défaut, telle que décrite lors de la description de l'étape 401, est utilisée. Ainsi, la valeur par défaut du paramètre de chiffrement SEED choisie par le serveur central 300 lors de l'étape 401 et la valeur par défaut du paramètre de chiffrement SEED choisie par le compteur communicant CPT 200 lors de l'étape 422 sont identiques. Dit autrement, le serveur central SRV 300 et le compteur communicant CPT 200 utilisent une valeur identique du paramètre de chiffrement SEED de manière à générer une même clef de chiffrement partagée « K » lors de la première itération du procédé.

Dans une étape 423, le compteur communicant 200 génère la clef de chiffrement partagée « K » à partir du premier mot de passe reçu et du paramètre de chiffrement SEED retrouvé.

Suite à l'étape 410, la passerelle de communication 120 ayant ouvert une session de communication avec le compteur communicant 200, la passerelle de communication 120 transfère le premier message COM vers le compteur communicant 200.

Dans une étape 424, le compteur communicant 200 reçoit le premier message COM en provenance du serveur central et transféré par la passerelle de communication 120, le premier message COM étant chiffré au moyen de la clef de chiffrement partagée « K ».

Dans une étape 425, le compteur communicant 200 déchiffre le premier message COM au moyen de la clef de chiffrement partagée « K » générée lors de l'étape 423. On entend par « déchiffrement d'un message », le déchiffrement de la charge utile chiffrée dudit message.

Dans une étape 426, le compteur communicant 200 détermine une nouvelle valeur pour le paramètre de chiffrement SEED. Selon un mode de réalisation de l'invention, le premier message COM comprend une commande d'interrogation d'une valeur d'un compteur du module de comptage 204 du compteur communicant 200, la nouvelle valeur pour le paramètre de chiffrement SEED étant choisie égale à la valeur du compteur du module de comptage 204 interrogé. Dit autrement, le serveur central 300 fait en sorte qu'une nouvelle valeur du paramètre de chiffrement SEED soit déterminée par le compteur communicant 200, la nouvelle valeur correspondant au résultat d'une commande d'interrogation de la valeur d'un compteur envoyée par le serveur central 300.

Dans une étape 427, le compteur communicant 200 prépare et chiffre un troisième message RES à destination du serveur central 300, le troisième message RES comprenant la réponse à la commande d'interrogation comprise dans le premier message COM, c'est-à-dire comprenant la nouvelle valeur du paramètre de chiffrement SEED. Le troisième message RES est chiffré au moyen de la clef de chiffrement partagée « K » déterminée lors de l'étape 423 par le compteur communicant 200, et qui est identique à celle déterminée par le serveur central 300 lors de l'étape 402.

Dans une étape 428, le compteur communicant 200 met à jour la valeur du paramètre de chiffrement SEED enregistré sur le module de stockage 204 avec la nouvelle valeur du paramètre de chiffrement déterminée à l'étape 427. La nouvelle valeur du paramètre de chiffrement SEED est utilisée pour la détermination d'une nouvelle clef de chiffrement partagée « K », commune au serveur central 300 et au compteur communicant 200, lors d'une nouvelle session de communication, particulièrement lorsqu'une nouvelle étape 422 est effectuée par le compteur communicant 200.

Dans une étape 429, le compteur communicant 200 émet le troisième message RES à destination du serveur central 300.

Dans une étape 412, la passerelle de communication reçoit et transmet au serveur central 300 le troisième message RES.

Dans une étape 404, le serveur central 300 reçoit, en retour à son premier message COM, le troisième message RES comprenant la valeur du compteur, et correspondant à la nouvelle valeur du paramètre de chiffrement SEED, le message étant chiffré au moyen de la clef de chiffrement partagée « K ».

Dans une étape 405, le serveur central 300 déchiffre le troisième message RES, retrouve ainsi la nouvelle valeur du paramètre de chiffrement SEED et met à jour la valeur du paramètre de chiffrement SEED, associé au compteur communicant 200, enregistré sur le module de stockage 303. C'est cette nouvelle valeur mise à jour qui sera utilisée lors d'une nouvelle itération de l'étape 401.

Ainsi, le procédé décrit garantit qu'une valeur différente du paramètre de chiffrement SEED est utilisée lors de chaque itération du procédé. Cela permet donc la génération par le serveur central 300 et le compteur communicant 200 d'une clef de chiffrement partagée « K » différente lors de chaque itération. L'utilisation de la valeur d'un compteur du module de comptage 204 interrogé comme valeur du paramètre de chiffrement SEED permet :
- de n'envoyer qu'un unique message du compteur communicant 200 vers le serveur central 300, ce qui économise de la bande passante,
- d'obtenir un aléa dans le choix de la nouvelle valeur du paramètre de chiffrement SEED - la valeur d'un compteur étant imprévisible -, ce qui complique grandement les attaques par force brute *(brute force attack* en anglais).

Il est à noter que le procédé décrit peut être avantageusement mis en œuvre sur des compteurs communicants déjà déployés sans qu'aucune modification matérielle ne soit nécessaire et sans qu'aucune transmission en clair d'une clef de chiffrement ne soit effectuée.

## Revendications

1. Procédé de chiffrement à clef partagée entre un serveur central (100, 300) et un compteur communicant (130, 13N, 200), le procédé étant exécuté par le compteur communicant, le procédé étant **caractérisé en ce qu'**il comprend :
- recevoir (420) un premier message comprenant un premier mot de passe, le premier message indiquant une ouverture d'une session de communication,
- déterminer (421) une première empreinte correspondant à une empreinte du premier mot de passe,
- obtenir (421) une deuxième empreinte prédéterminée, et,
quand la première empreinte est égale à la deuxième empreinte, alors :
- obtenir (422) un paramètre de chiffrement prédéterminé,
- générer (423) une clef de chiffrement à partir du premier mot de passe reçu et du paramètre de chiffrement,
- recevoir (424) un deuxième message en provenance du serveur central, le deuxième message étant chiffré et comprenant une commande d'interrogation d'une valeur d'un compteur d'un module de comptage du compteur communicant, et,
- déchiffrer (425) le deuxième message au moyen de la clef de chiffrement,
- déterminer (426) une nouvelle valeur pour le paramètre de chiffrement, choisie égale à la valeur du compteur du module de comptage interrogé,
- émettre (427, 429) un troisième message à destination du serveur central, le troisième message comprenant la nouvelle valeur du paramètre de chiffrement et étant chiffré au moyen de la clef de chiffrement, et,
- mettre à jour (428) la valeur du paramètre de chiffrement enregistré sur un module de stockage avec la nouvelle valeur du paramètre de chiffrement, la nouvelle valeur du paramètre de chiffrement étant utilisée pour la détermination d'une nouvelle clef de chiffrement, commune au serveur central et au compteur communicant, lors d'une nouvelle session de communication.

2. Compteur communicant (130, 13N, 200), le compteur communicant étant **caractérisé en ce qu'**il est adapté pour :
- recevoir (420) un premier message comprenant un premier mot de passe, le premier message indiquant une ouverture d'une session de communication,
- déterminer (421) une première empreinte correspondant à une empreinte du premier mot de passe,
- obtenir (421) une deuxième empreinte prédéterminée, et,
quand la première empreinte est égale à la deuxième empreinte, alors :
- obtenir (422) un paramètre de chiffrement prédéterminé,
- générer (423) une clef de chiffrement à partir du premier mot de passe reçu et de la valeur du paramètre de chiffrement,
- recevoir (424) un deuxième message en provenance du serveur central, le deuxième message étant chiffré et comprenant une commande d'interrogation d'une valeur d'un compteur d'un module de comptage du compteur communicant, et,
- déchiffrer (425) le deuxième message au moyen de la clef de chiffrement,
- déterminer (426) une nouvelle valeur pour le paramètre de chiffrement, choisie égale à la valeur du compteur du module de comptage interrogé,
- émettre (427, 429) un troisième message à destination du serveur central, le troisième message comprenant la nouvelle valeur du paramètre de chiffrement et étant chiffré au moyen de la clef de chiffrement, et,
- mettre à jour (428) la valeur du paramètre de chiffrement enregistré sur un module de stockage avec la nouvelle valeur du paramètre de chiffrement, la nouvelle valeur du paramètre de chiffrement étant utilisée pour la détermination d'une nouvelle clef de chiffrement, commune au serveur central et au compteur communicant, lors d'une nouvelle session de communication.

3. Procédé de chiffrement à clef partagée entre un serveur central (100, 300) et un compteur communicant (130, 13N, 200), le procédé étant exécuté par le serveur central, le procédé étant **caractérisé en ce qu'**il comprend :
- générer un premier mot de passe en utilisant un identifiant du compteur communicant,
- obtenir un paramètre de chiffrement associé audit compteur communicant,
- générer une clef de chiffrement à partir du premier mot de passe généré et du paramètre de chiffrement obtenu,
- émettre un message à destination du compteur communicant, le message comprenant une commande de lecture d'une valeur d'un compteur d'un module de comptage du compteur communicant, le message étant chiffré au moyen de la clef de chiffrement,
- recevoir en retour un message comprenant la valeur du compteur du module de comptage, le message étant chiffré au moyen de la clef de chiffrement,
- déchiffrer le message reçu,
- mettre à jour la valeur du paramètre de chiffrement associé avec le compteur communicant, en utilisant la valeur reçue du compteur du module de comptage.

4. Serveur central (100, 300), le serveur central étant **caractérisé en ce qu'**il est adapté pour :
- générer un premier mot de passe,
- obtenir un paramètre de chiffrement,
- générer une clef de chiffrement à partir du premier mot de passe généré et du paramètre de chiffrement obtenu,
- émettre un message à destination d'un compteur communicant, le message comprenant une commande de lecture d'une valeur d'un compteur d'un module de comptage du compteur communicant, le message étant chiffré au moyen de la clef de chiffrement,
- recevoir en retour un message comprenant la valeur du compteur du module de comptage, le message étant chiffré au moyen de la clef de chiffrement,
- déchiffrer le message reçu,
- mettre à jour la valeur du paramètre de chiffrement en utilisant la valeur reçue du compteur du module de comptage.

5. Système comprenant un serveur central (100, 300) et un compteur communicant (130, 13N, 200), le compteur communicant étant adapté pour :
- recevoir un premier message comprenant un premier mot de passe, le premier message indiquant l'ouverture d'une session de communication,
- déterminer une première empreinte correspondant à une empreinte du premier mot de passe,
- obtenir une deuxième empreinte, et,
quand la première empreinte est égale à la deuxième empreinte, alors :
- générer une clef de chiffrement à partir du premier mot de passe reçu et de la valeur d'un paramètre de chiffrement,
- recevoir un deuxième message en provenance du serveur central, le deuxième message comprenant une commande de lecture d'une valeur d'un compteur d'un module de comptage du compteur communicant, le deuxième message étant chiffré au moyen de la clef de chiffrement,
- déchiffrer le deuxième message au moyen de la clef de chiffrement,
- déterminer une nouvelle valeur pour le paramètre de chiffrement, la nouvelle valeur correspondant à la valeur du compteur du module de comptage compteur communicant lue,
- émettre un troisième message à destination du serveur central, le troisième message comprenant la nouvelle valeur du paramètre de chiffrement et étant chiffré au moyen de la clef de chiffrement, et,
- mettre à jour la valeur du paramètre de chiffrement en utilisant la nouvelle valeur du paramètre de chiffrement,
le serveur central étant adapté pour :
- générer le premier mot de passe,
- obtenir le paramètre de chiffrement,
- générer une clef de chiffrement à partir du premier mot de passe généré et du paramètre de chiffrement,
- émettre le deuxième message à destination du compteur communicant,
- recevoir en retour le troisième message,
- déchiffrer le troisième message reçu,
- mettre à jour la valeur du paramètre de chiffrement en utilisant la valeur reçue du compteur.

6. Programme d'ordinateur, **caractérisé en ce qu'**il comprend des instructions pour mettre en œuvre, par un processeur (201), le procédé de chiffrement à clef partagée entre un serveur central (100, 300) et un compteur communicant (130, 13N, 200) selon la revendication 1, lorsque ledit programme d'ordinateur est exécuté par ledit processeur.

7. Moyens de stockage, **caractérisés en ce qu'**ils stockent un programme d'ordinateur comprenant des instructions pour mettre en œuvre, lorsqu'il est chargé dans une mémoire (202) d'un compteur communicant (200) et qu'il est exécuté par un processeur (201) du compteur communicant, un procédé selon la revendication 1.

## Patentansprüche

1. Verfahren zur Verschlüsselung mit einem Schlüssel, der von einem Zentralserver (100, 300) und einem intelligenten Zähler (130, 13N, 200) gemeinsam genutzt wird, wobei das Verfahren vom intelligenten Zähler ausgeführt wird, wobei das Verfahren **dadurch gekennzeichnet ist, dass** es Folgendes umfasst:
- Empfangen (420) einer ersten Nachricht, die ein erstes Passwort umfasst, wobei die erste Nachricht eine Eröffnung einer Kommunikationssitzung angibt,
- Bestimmen (421) eines ersten Hashes, der einem Hash des ersten Passworts entspricht,
- Erhalten (421) eines vorbestimmten zweiten Hashes, und,
wenn der erste Hash gleich dem zweiten Hash ist, dann:
- Erhalten (422) eines vorbestimmten Verschlüsselungsparameters,
- Erzeugen (423) eines Verschlüsselungsschlüssels anhand des empfangenen ersten Passworts und des Verschlüsselungsparameters,
- Empfangen (424) einer zweiten Nachricht vom Zentralserver, wobei die zweite Nachricht verschlüsselt ist und einen Befehl zur Abfrage eines Werts eines Zählers eines Zählmoduls des intelligenten Zählers umfasst, und
- Entschlüsseln (425) der zweiten Nachricht mittels des Verschlüsselungsschlüssels,
- Bestimmen (426) eines neuen Werts für den Verschlüsselungsparameter, der gleich dem Wert des abgefragten Zählers des Zählmoduls gewählt ist,
- Senden (427, 429) einer dritten Nachricht an den Zentralserver, wobei die dritte Nachricht den neuen Wert des Verschlüsselungsparameters umfasst und mittels des Verschlüsselungsschlüssels verschlüsselt ist, und
- Aktualisieren (428) des Werts des Verschlüsselungsparameters, der auf einem Speicherungsmodul gespeichert ist, mit dem neuen Wert des Verschlüsselungsparameters, wobei der neue Wert des Verschlüsselungsparameters für die Bestimmung eines neuen Verschlüsselungsschlüssels, der dem Zentralserver und dem intelligenten Zähler gemein ist, bei einer neuen Kommunikationssitzung genutzt wird.

2. Intelligenter Zähler (130, 13N, 200), wobei der intelligente Zähler **dadurch gekennzeichnet ist, dass** er dafür geeignet ist:
- eine erste Nachricht zu empfangen (420), die ein erstes Passwort umfasst, wobei die erste Nachricht eine Eröffnung einer Kommunikationssitzung angibt,
- einen ersten Hash zu bestimmen (421), der einem Hash des ersten Passworts entspricht,
- einen vorbestimmten zweiten Hash zu erhalten (421), und,
wenn der erste Hash gleich dem zweiten Hash ist, dann:
- einen vorbestimmten Verschlüsselungsparameter zu erhalten (422),
- einen Verschlüsselungsschlüssel anhand des empfangenen ersten Passworts und des Verschlüsselungsparameters zu erzeugen (423),
- eine zweite Nachricht vom Zentralserver zu empfangen (424), wobei die zweite Nachricht verschlüsselt ist und einen Befehl zur Abfrage eines Werts eines Zählers eines Zählmoduls des intelligenten Zählers umfasst, und
- die zweite Nachricht mittels des Verschlüsselungsschlüssels zu entschlüsseln (425),
- einen neuen Wert für den Verschlüsselungsparameter zu bestimmen (426), der gleich dem Wert des abgefragten Zählers des Zählmoduls gewählt ist,
- eine dritte Nachricht an den Zentralserver zu senden (427, 429), wobei die dritte Nachricht den neuen Wert des Verschlüsselungsparameters umfasst und mittels des Verschlüsselungsschlüssels verschlüsselt ist, und
- den Wert des Verschlüsselungsparameters, der auf einem Speicherungsmodul gespeichert ist, mit dem neuen Wert des Verschlüsselungsparameters zu aktualisieren (428), wobei der neue Wert des Verschlüsselungsparameters für die Bestimmung eines neuen Verschlüsselungsschlüssels, der dem Zentralserver und dem intelligenten Zähler gemein ist, bei einer neuen Kommunikationssitzung genutzt wird.

3. Verfahren zur Verschlüsselung mit einem Schlüssel, der von einem Zentralserver (100, 300) und einem intelligenten Zähler (130, 13N, 200) gemeinsam genutzt wird, wobei das Verfahren vom Zentralserver ausgeführt wird, wobei das Verfahren **dadurch gekennzeichnet ist, dass** es Folgendes umfasst:
- Erzeugen eines ersten Passworts unter Verwendung einer Kennung des intelligenten Zählers,
- Erhalten eines Verschlüsselungsparameters, der dem intelligenten Zähler zugeordnet ist,
- Erzeugen eines Verschlüsselungsschlüssels anhand des erzeugten ersten Passworts und des erhaltenen Verschlüsselungsparameters,
- Senden einer Nachricht an den intelligenten Zähler, wobei die Nachricht einen Befehl zum Lesen eines Werts eines Zählers eines Zählmoduls des intelligenten Zählers umfasst, wobei die Nachricht mittels des Verschlüsselungsschlüssels verschlüsselt ist,
- Empfangen einer Nachricht im Gegenzug, die den Wert des Zählers des Zählmoduls umfasst, wobei die Nachricht mittels des Verschlüsselungsschlüssels verschlüsselt ist,
- Entschlüsseln der empfangenen Nachricht,
- Aktualisieren des Werts des Verschlüsselungsparameters, der dem intelligenten Zähler zugeordnet ist, unter Verwendung des Werts, der vom Zähler des Zählmoduls empfangen wird.

4. Zentralserver (100, 300), wobei der Zentralserver **dadurch gekennzeichnet ist, dass** er dafür geeignet ist:
- ein erstes Passwort zu erzeugen,
- einen Verschlüsselungsparameter zu erhalten,
- einen Verschlüsselungsschlüssel anhand des erzeugten ersten Passworts und des erhaltenen Verschlüsselungsparameters zu erzeugen,
- eine Nachricht an einen intelligenten Zähler zu senden, wobei die Nachricht einen Befehl zum Lesen eines Werts eines Zählers eines Zählmoduls des intelligenten Zählers umfasst, wobei die Nachricht mittels des Verschlüsselungsschlüssels verschlüsselt ist,
- eine Nachricht im Gegenzug zu empfangen, die den Wert des Zählers des Zählmoduls umfasst, wobei die Nachricht mittels des Verschlüsselungsschlüssels verschlüsselt ist,
- die empfangene Nachricht zu entschlüsseln,
- den Wert des Verschlüsselungsparameters unter Verwendung des Werts, der vom Zähler des Zählmoduls empfangen wird, zu aktualisieren.

5. System umfassend einen Zentralserver (100, 300) und einen intelligenten Zähler (130, 13N, 200), wobei der intelligente Zähler dafür geeignet ist:
- eine erste Nachricht zu empfangen, die ein erstes Passwort umfasst, wobei die erste Nachricht die Eröffnung einer Kommunikationssitzung angibt,
- einen ersten Hash zu bestimmen, der einem Hash des ersten Passworts entspricht,
- einen zweiten Hash zu erhalten, und,
wenn der erste Hash gleich dem zweiten Hash ist, dann:
- einen Verschlüsselungsschlüssel anhand des empfangenen ersten Passworts und eines Verschlüsselungsparameters zu erzeugen,
- eine zweite Nachricht vom Zentralserver zu empfangen, wobei die zweite Nachricht einen Befehl zum Lesen eines Werts eines Zählers eines Zählmoduls des intelligenten Zählers umfasst, wobei die zweite Nachricht mittels des Verschlüsselungsschlüssels verschlüsselt ist,
- die zweite Nachricht mittels des Verschlüsselungsschlüssels zu entschlüsseln,
- einen neuen Wert für den Verschlüsselungsparameter zu bestimmen, wobei der neue Wert dem gelesenen Wert des Zählers des Zählmoduls intelligenten des Zählers entspricht,
- eine dritte Nachricht an den Zentralserver zu senden, wobei die dritte Nachricht den neuen Wert des Verschlüsselungsparameters umfasst und mittels des Verschlüsselungsschlüssels verschlüsselt ist, und
- den Wert des Verschlüsselungsparameters unter Verwendung des neuen Werts des Verschlüsselungsparameters zu aktualisieren,
wobei der Zentralserver dafür geeignet ist:
- das erste Passwort zu erzeugen,
- den Verschlüsselungsparameter zu erhalten,
- einen Verschlüsselungsschlüssel anhand des erzeugten ersten Passworts und des Verschlüsselungsparameters zu erzeugen,
- die zweite Nachricht an den intelligenten Zähler zu senden,
- die dritte Nachricht im Gegenzug zu empfangen,
- die empfangene dritte Nachricht zu entschlüsseln,
- den Wert des Verschlüsselungsparameters unter Verwendung des Werts, der vom Zähler empfangen wird, zu aktualisieren.

6. Computerprogramm, **dadurch gekennzeichnet, dass** es Anweisungen umfasst, um durch einen Prozessor (201) das Verfahren zur Verschlüsselung mit einem Schlüssel, der von einem Zentralserver (100, 300) und einem intelligenten Zähler (130, 13N, 200) gemeinsam genutzt wird, nach Anspruch 1, durchzuführen, wenn das Computerprogramm von dem Prozessor ausgeführt wird.

7. Speicherungsmittel, **dadurch gekennzeichnet, dass** sie ein Computerprogramm speichern, das Anweisungen umfasst, um ein Verfahren nach Anspruch 1 durchzuführen, wenn es in einen Speicher (202) eines intelligenten Zählers (200) geladen ist und von einem Prozessor (201) des intelligenten Zählers ausgeführt wird.

## Claims

1. Shared-key encryption method using a key shared between a central server (100, 300) and a smart meter (130, 13N, 200), the method being carried out by the smart meter, the method being **characterized in that** it comprises:
- receiving (420) a first message comprising a first password, the first message indicating the opening of a communication session,
- determining (421) a first fingerprint corresponding to a fingerprint of the first password,
- obtaining (421) a second predetermined fingerprint, and,
when the first fingerprint is equal to the second fingerprint, then:
- obtaining (422) a predetermined encryption parameter,
- generating (423) an encryption key on the basis of the received first password and of the encryption parameter,
- receiving (424) a second message from the central server, the second message being encrypted and comprising a command to query a value of a meter of a metering module of the smart meter, and
- decrypting (425) the second message by means of the encryption key,
- determining (426) a new value for the encryption parameter, which new value is chosen so as to be equal to the value of the meter of the metering module that has been queried,
- transmitting (427, 429) a third message to the central server, the third message comprising the new value of the encryption parameter and being encrypted by means of the encryption key, and
- updating (428) the value of the encryption parameter recorded on a storage module with the new value of the encryption parameter, the new value of the encryption parameter being used to determine a new encryption key, which is common to the central server and to the smart meter, during a new communication session.

2. Smart meter (130, 13N, 200), the smart meter being **characterized in that** it is designed to:
- receive (420) a first message comprising a first password, the first message indicating the opening of a communication session,
- determine (421) a first fingerprint corresponding to a fingerprint of the first password,
- obtain (421) a second predetermined fingerprint, and,
when the first fingerprint is equal to the second fingerprint, then:
- obtain (422) a predetermined encryption parameter,
- generate (423) an encryption key on the basis of the received first password and of the value of the encryption parameter,
- receive (424) a second message from the central server, the second message being encrypted and comprising a command to query a value of a meter of a metering module of the smart meter, and
- decrypt (425) the second message by means of the encryption key,
- determine (426) a new value for the encryption parameter, which new value is chosen so as to be equal to the value of the meter of the metering module that has been queried,
- transmit (427, 429) a third message to the central server, the third message comprising the new value of the encryption parameter and being encrypted by means of the encryption key, and
- update (428) the value of the encryption parameter recorded on a storage module with the new value of the encryption parameter, the new value of the encryption parameter being used to determine a new encryption key, which is common to the central server and to the smart meter, during a new communication session.

3. Shared-key encryption method using a key shared between a central server (100, 300) and a smart meter (130, 13N, 200), the method being carried out by the central server, the method being **characterized in that** it comprises:
- generating a first password by using an identifier of the smart meter,
- obtaining an encryption parameter associated with said smart meter,
- generating an encryption key on the basis of the generated first password and of the obtained encryption parameter,
- transmitting a message to the smart meter, the message comprising a command to read a value of a meter of a metering module of the smart meter, the message being encrypted by means of the encryption key,
- receiving in return a message comprising the value of the meter of the metering module, the message being encrypted by means of the encryption key,
- decrypting the received message,
- updating the value of the encryption parameter associated with the smart meter by using the received value of the meter of the metering module.

4. Central server (100, 300), the central server being **characterized in that** it is designed to:
- generate a first password,
- obtain an encryption parameter,
- generate an encryption key on the basis of the generated first password and of the obtained encryption parameter,
- transmit a message to a smart meter, the message comprising a command to read a value of a meter of a metering module of the smart meter, the message being encrypted by means of the encryption key,
- receive in return a message comprising the value of the meter of the metering module, the message being encrypted by means of the encryption key,
- decrypt the received message,
- update the value of the encryption parameter by using the received value of the meter of the metering module.

5. System comprising a central server (100, 300) and a smart meter (130, 13N, 200), the smart meter being designed to:
- receive a first message comprising a first password, the first message indicating the opening of a communication session,
- determine a first fingerprint corresponding to a fingerprint of the first password,
- obtain a second fingerprint, and,
when the first fingerprint is equal to the second fingerprint, then:
- generate an encryption key on the basis of the received first password and of the value of an encryption parameter,
- receive a second message from the central server, the second message comprising a command to read a value of a meter of a metering module of the smart meter, the second message being encrypted by means of the encryption key,
- decrypt the second message by means of the encryption key,
- determine a new value for the encryption parameter, the new value corresponding to the read value of the meter of the metering module of the smart meter,
- transmit a third message to the central server, the third message comprising the new value of the encryption parameter and being encrypted by means of the encryption key, and
- update the value of the encryption parameter by using the new value of the encryption parameter,
the central server being designed to:
- generate the first password,
- obtain the encryption parameter,
- generate an encryption key on the basis of the generated first password and of the encryption parameter,
- transmit the second message to the smart meter,
- receive in return the third message,
- decrypt the received third message,
- update the value of the encryption parameter by using the received value of the meter.

6. Computer program, **characterized in that** it comprises instructions for implementing, by means of a processor (201), the shared-key encryption method using a key shared between a central server (100, 300) and a smart meter (130, 13N, 200) according to Claim 1 when said computer program is executed by said processor.

7. Storage means, **characterized in that** they store a computer program comprising instructions for implementing a method according to Claim 1 when said program is loaded into a memory (202) of a smart meter (200) and is executed by a processor (201) of the smart meter.
